# EUROPÄISCHE PATENTSCHRIFT

(11) **EP 2 436 251 B1**
(45) Veröffentlichungstag und Bekanntmachung des Hinweises auf die Patenterteilung: **11.06.2014**
(21) Anmeldenummer: 11001677.1
(22) Anmeldetag: 08.04.2011
(51) Int. Cl.: A01B 63/00, A01D 78/10, A01D 80/00

(54) **Heuwerbungsmaschine zum Wenden von am Boden liegendem Erntegut**
Hay tedder for turning crops lying on the ground
Faneuse destinée à retourner des récoltes se trouvant sur le sol

(30) Priorität: 01.10.2010 DE 102010047068
(43) Veröffentlichungstag der Anmeldung: 04.04.2012
(73) Patentinhaber: CLAAS Saulgau GmbH, 88348 Bad Saulgau (DE)
(72) Erfinder: Geng, Manfred, 88348 Bad Saulgau (DE)

(56) Entgegenhaltungen:
- EP-A1- 0 460 288
- EP-A1- 1 813 142
- EP-A2- 1 190 613

## Beschreibung

Die Erfindung betrifft eine Heuwerbungsmaschine zum Wenden von am Boden liegenden Erntegut nach dem Oberbegriff des Anspruches 1.

### Stand der Technik

EP 0 460 288 A1 offenbart eine Heuwerbungsmaschine zum Zetten und Wenden von Halm- und Blattgut mit mehreren Rechrädern, die an aufrechten Drehachsen abwechselnd gegensinnig angetrieben umlaufen, die sich mit Tasträdern auf den Boden abstützen und an Tragrahmen eines quer zur Arbeitsrichtung der Maschine ausgerichteten, unterteilten Maschinenrahmens befestigt sind, die untereinander mit Gelenken verbunden sind, welche um liegende, in Arbeitsrichtung weisende Schwenkachsen scharnieren und mit denen die Tragrahmen von einer Arbeitslage in eine Transportlage nach oben verschwenkbar sind, in der die Breite der Maschine auf Strassenfahrbreite herabgesetzt ist, während der innere Tragrahmen, der die Verbindungsvorrichtung für ein Zugfahrzeug trägt, unverschwenkt bleibt, wobei der innere Tragrahmen mit einer Abstützvorrichtung versehen ist, die wenigstens ein Stützrad umfasst und deren Stützradträger über die Rechräder hinweg greift und in Bezug auf die Arbeitsrichtung hinter den Rechrädern in geringem Abstand zu diesen den Maschinenrahmen zusätzlich abstütz.

Aus EP 1 190 613 A2 ist eine Vorrichtung zum Zusammenrechen von Gras und/oder Heu bekannt, wobei die Vorrichtung mindestens eine Bearbeitungseinheit umfasst, die mit Bearbeitungselementen zum Bearbeiten der Bodenoberfläche versehen ist und eine Messvorrichtung vorgesehen ist, die geeignet ist, die zu bearbeitende Bodenoberfläche abzufühlen und/oder abzutasten und eventuell in der Bodenoberfläche vorhandene Bodenunebenheiten, wie z. B. Böschungen und/oder Löcher, zu ermitteln, und die Vorrichtung mit einer Stellvorrichtung versehen ist, die auf der Basis der Messergebnisse der Messvorrichtung die Ausrichtung mindestens eines Bearbeitungselements relativ zu der Bodenoberfläche automatisch einstellt.

Bekannt sind Heuwerbungsmaschinen zum Wenden von am Boden liegenden stängeligem Erntegut mit mehreren in einem Maschinengestell quer zur Fahrtrichtung nebeneinander angeordneten und in diesem gelagerten und gegenläufig zueinander umlaufend um Hochachsen antreibbaren Rechkreiseln. Derartige Heuwerbungsmaschinen sind auch unter dem Begriff Kreiselzetter In der Sicherheitsnorm DN EN ISO 4254-10 beschrieben, Die Anzahl der Rechkreisel bestimmt die Arbeitsbreite, die zwischenzeitlich die 10 m Marke weit überschritten hat. In der Transportstellung für den Straßentransport müssen diese Maschinen in ein Straßentransportprofil überführt werden, weiches die Breite von 3 m und die Höhe von 4 m nicht wesentlich übersteigen darf.

Diese Heuwerbungsmaschinen werden an ein Zugfahrzeug und deren zapfwalle angeschlossen und von dieser angetrieben. Stellantriebe werden an die Bordhydraulik des Zugfahrzeuges angekuppelt und können somit aus dem Inneren der Fahrerkabine mit den üblichen Stellelementen angesteuert und betätigt werden.

Gerade bei großen Arbeitsbreiten ist die Bodenanpassung der Rechkreisel und damit die Abstandskontrolle der Zinkenspitzen der Rechzinken von großer Bedeutung dafür, dass einerseits kein Erntegut unbearbeitet überfahren wird und andererseits die Zinkenspitzen nicht in den Boden einstechen, damit das Erntegut nicht mit Bodenanteilen verunreinigt wird.

### Aufgabenstellung

Hier setzt die Aufgabe der Erfindung an mit dem Ziel, eine Heuwerbungsmaschine der beschriebenen Art mit verbesserten Steuerungsmöglichkeiten zur Anpassung der Rechkreisel an unterschiedliche Einsatzbedingungen im Feldbetrieb vorzuschlagen.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Erfindungsgemäße Heuwerbungsmaschinen sind mit einem Steuerungssystem ausgestattet, welches es ermöglicht, Bodenwellen zu überfahren, ohne dass die Zinkenspitzen (51) der Rechzinken (50) in den Boden der Bodenwelle einstechen und dadurch das Futter verschmutzen.

Erfindungsgemäße Heuwerbungsmaschinen zum Wenden von am Boden liegendem stängeligem Erntegut sind ausgestattet mit wenigstens zwei in einem Maschinengestell quer zur Fahrtrichtung nebeneinander gelagerten und gegenläufig zueinander umlaufend um Hochachsen antreibbaren Rechkreiseln mit einem bodenkopierenden Tast- und Stützrad unterhalb des Rechkreisels, wobei das Maschinengestell ein Transportfahrwerk aufweist, welches den Rechkreiseln in Fahrtrichtung gesehen nachgeordnet ist. Dieses kann wahlweise in oder außer Eingriff mit dem Boden gebracht werden. Die Rechkreisel sind von einem Maschinengestell überbaut, welches die Rechkreisel aufnimmt und welches mit einer Zugdeichsel gelenkig verbunden ist. Die Zugdeichsel wiederum ist frontseitig um eine Hochachse verschwenkbar mit einer Anschlussvorrichtung verbunden, welche zur Ankoppelung an ein Zugfahrzeug vorgesehen ist.

Erfindungsgemäß bilden Maschinengestell und Zugdeichsel in ihrer Längserstreckung gemeinsam eine Knickdeichsel 52 mit dem Kniegelenk, wobei das Kniegelenk mit einer im Wesentlichen horizontal und quer zur Fahrtrichtung verlaufenden Gelenkachse ausgebildet ist und wobei das Kniegelenk von einem Stellmittel überbrückt ist. Dabei übernimmt das Stellmittel mehrere Funktionen durch die Lage seiner beiden Kolbenstangen, nämlich die Lage und Ausrichtung der Knickdeichsel 52 und der Rechkreisel, wodurch zum einen unterschiedliche Streuwinkel und zum anderen die unterschiedlichen Lagen der Rechkreisel in der Arbeitsstellung, in der Vorgewendestellung, in der Bodenwellenüberfahrstellung und in der Transportstellung mitbestimmt wird.

Das hinter den Rechkreiseln liegende Fahrwerk besteht aus mindestens zwei nebeneinander liegenden und beabstandeten Stützrädern, die an einer Schwinge befestigt und gelagert sind. Die Schwinge wird an einem Stellantrieb, ausgebildet als Hydraulikzylinder, abgestützt bzw. von diesem betätigt, wobei das Fahrwerk lediglich als Transportfahrwerk, insbesondere für den Straßentransport benutzt wird.

Das Kniegelenk der Zugdeichsel ist von einem Stellmittel, erfindungsgemäß einem Hydraulikzylinder, überbrückt. Mit diesem Stellmittel können unterschiedliche Betriebsstellungen herbeigeführt werden, ohne dass dabei das Hubwerk der Dreipunkthydraulik des Zugfahrzeugs betätigt werden muss. Es handelt sich dabei um die Arbeitsstellung der Rechkreisel, die Vorgewendestellung und um eine Sonderstellung der Rechkreisel zum Überfahren von Bodenwellen, um eine Futterverschmutzung durch Eintauchen der Zinkenspitzen in den Boden zu vermeiden. Letztere dient dazu, den Abstand der Zinkenspitzen gegenüber dem Boden kurzzeitig zu vergrößern und danach, sobald das normale Planum wieder vorhanden ist, schnell wieder zu verkleinern.

Dabei dient dieses Stellmittel gleichermaßen zum Ausheben der Rechkreisel in die Vorgewendestellung, indem die Knickdeichsel 52 durch dieses Stellmittel so eingestellt wird, dass die Kreiselachse der Rechkreisel etwa lotrecht zur Aufstandsfläche bzw. dem Boden eingestellt ist, so dass die Zinkenspitzen während ihres Umlaufs einen großen und zugleich gleichen Abstand zum Boden haben.

Erfindungsgemäß ist das Stellmittel als doppelter Hydraulikzylinder, einem ersten und einem zweiten Hydraulikzylinder ausgestaltet, wobei beide Hydraulikzylinder in Reihe liegend eine Baueinheit bilden.

Dieses Stellmittel erfüllt somit eine Mehrfachfunktionen, nämlich zum einen die Funktion, die Rechkreisel unter dem vorgegebenen Streuwinkel in Arbeitsposition zu bringen und zu halten und zum anderen die Rechkreisel in eine Vorgewendestellung zu überführen und zu halten. Dabei beinhaltet das Stellmittel Initiatoren, welche die Endlagen der Kolbenstangen erfassen und diese in Form von Eingangssignalen an eine Steuereinheit weitergeben.

Erfindungsgemäß umfasst die Knickdeichsel 52 ein Messsystem in Form eines Bodenabstandssensors 17, der das Bodenrelief vor den Rechkreiseln abtastet. Dieser Abstandssensor erzeugt ein Eingangssignal an eine Steuereinheit, welche dann beim Überschreiten eines vorgegebenen Pegels einen Aktor ansteuert, welcher das Stellmittel derart betätigt, dass sich der Knickwinkel der Knickdeichsel 52 verändert, wodurch sich der Streuwinkel der Rechkreisel verändert. Dieser Verstellvorgang wird dazu genutzt, den Abstand der Zinkenspitzen gegenüber dem Boden zu verändern, so dass dieser Abstand vergrößert oder verkleinert wird. Dieses dient dazu, Bodenwellen so überfahren zu können, ohne dass die Zinkenspitzen in den Boden einstechen können. Ist die Bodenwelle überfahren worden, liefert der Abstandssensor ein Eingangssignal im Sinne eines zu hohen Pegels 48 an die Steuereinheit, so dass der ursprüngliche Knickwinkel der Knickdeichsel 52 und damit der ursprüngliche Streuwinkel durch Ansteuerung des Aktors und damit des Stellmittels wieder hergestellt wird.

Damit verfügt die Heuwerbungsmaschine über ein Steuersystem zur automatischen Anpassung der Rechkreisel an die Bodenkopierung zum Überfahren von Bodenwellen und damit zur Herbeiführung einer Bodenwellenüberfahrstellung.

### Ausführungsbeispiel

Ein Ausführungsbeispiel der Erfindung ist anhand der nachfolgenden Figurendarstellungen dargestellt und wird nachfolgend näher erläutert.

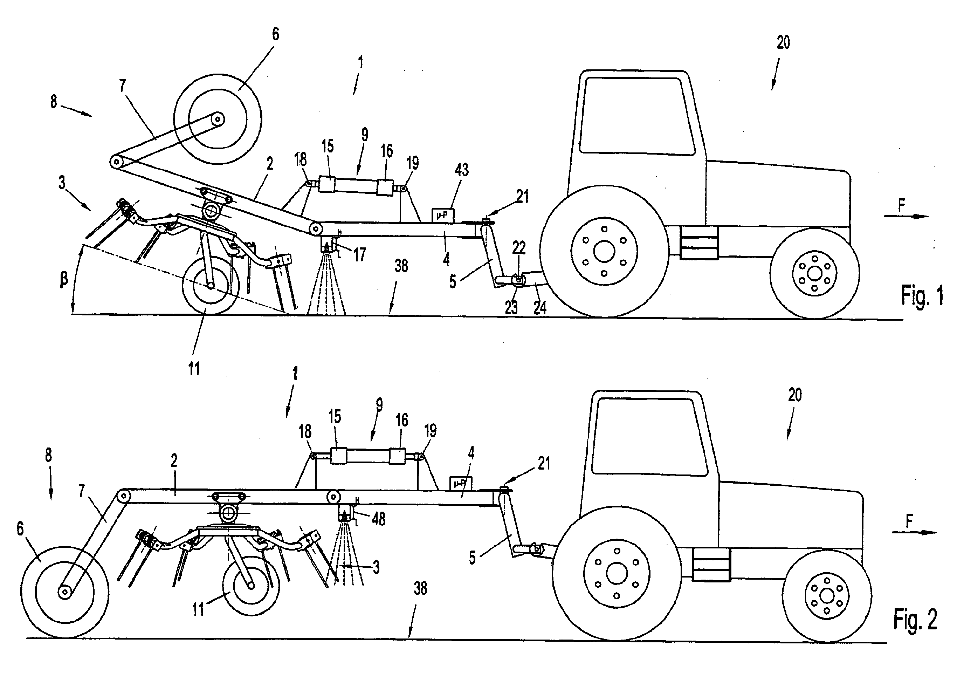

Fig.1 zeigt eine Seitenansicht einer Heuwerbungsmaschine 1 nach der Erfindung, ausgeführt als Kreiselzetter und als angehängtes Gerät an einem Zugfahrzeug 20 in Arbeitsstellung 25 und Fig.2 zeigt die gleiche Ansicht in der zusammengeklappten Transportstellung 26.

Fig.3 zeigt die Arbeitsstellung gemäß Fig.1 in vergrößerter Darstellung, Fig. 4 eine Vorgewendestellung 27 mit vom Boden 38 abgehobenen Rechkreiseln 3 und Fig. 5 die Transportstellung 26 gemäß Fig.2 in vergrößerter Darstellung.

Fig. 6 zeigt eine weitere Arbeitsstellung 25 analog Fig. 3, jedoch mit einer anderen Neigung der Kreiselachse 14 des Rechkreisels 3 bzw. einem anderen Streuwinkel β ' und damit mit einem anderen Zinkenabstand gegenüber dem Boden 38 vor dem Überfahren einer Bodenwelle 40.

Die Heuwerbungsmaschine 1 ist als angehängtes Gerät an ein Zugfahrzeug 20 bzw. an einem Traktor dargestellt. Sie besteht im Wesentlichen aus den Rechkreiseln 3 mit den Tast- und Stützrädern 11, einem Maschinengestell 2, einer Zugdeichsel 4, einer Anschlussvorrichtung 5 und einem Fahrwerk 8 mit zwei beabstandeten Stützrädern 6. Heuwerbungsmaschinen 1 dieser Art weisen je nach Arbeitsbreite eine Vielzahl von nebeneinander liegenden Rechkreiseln 3 auf, wobei die Anzahl der Rechkreisel in diesem Zusammenhang von untergeordneter Bedeutung ist. An dem Maschinengestell 2 sind die Rechkreisel 3 starr befestigt und in an sich bekannter Weise um Hochachsen 14 als Kreiselachsen von Winkelgetrieben umlaufend angetrieben und in Getriebegehäusen gelagert. Die Anschlussvorrichtung 5 ist in einem Gelenk 21 schwenkbar um eine Hochachse mit der Zugdeichsel 4 verbunden und sie wird traktorseitig mit ihren Unterlenkerzapfen 22 von den Greifklauen 23 der Unterlenker 24 des Hubwerks des Zugfahrzeugs 20 aufgenommen. Es handelt sich somit um eine angehängte und aufgesattelte Heuwerbungsmaschine 1.

Das Maschinengestell 2 und die Zugdeichsel 4 sind in einem Kniegelenk 12 um eine im Wesentlichen horizontal und quer zur Fahrtrichtung verlaufenden Gelenkachse 13 verschwenkbar miteinander verbunden. Das Kniegelenk 12 ist von einem Stellmittel 9, ausgebildet als Hydraulikzylinder, überbrückt, welcher in den Gelenkpunkten 18 und 19 zum einen an dem Maschinengestell 2 und zum anderen an der Zugdeichsel 4 angeschlagen ist. Dieses Stellmittel 9 besteht aus zwei, einem ersten Hydraulikzylinder 15 und einem zweiten Hydraulikzylinder 16, die in Reihe geschaltet sind und die eine Baueinheit bilden. Dieses Stellmittelt 9 ist in den Gelenkpunkten 18 und 19 oberhalb des Kniegelenks 12 angeschlagen.

Die Stützräder 6 des Fahrwerks 8 sind an Fahrwerksschwingen 7 gelagert, die von einem aus Vereinfachungsgründen, dem Fachmann bekannt, nicht dargestellten Stellmittel, ausgebildet als Hydraulikzylinder 10, an dem Maschinengestell 2 abgestützt sind.

Die Kreiselachsen 14 der Rechkreisel 3 sind in der Arbeitsstellung in Fahrtrichtung F nach vorn geneigt, so dass sich ein Streuwinkel β gegenüber der Aufstandsfläche bzw. dem Boden 38 einstellt.

In Fahrtrichtung F vor den Rechkreisein 3 befindet sich an der Zugdeichsel 4 ein Bodenabstandssensor 17, der den Abstand gegenüber dem Boden 38 erfasst und der ein Eingangssignal für eine Steuereinheit erzeugt.

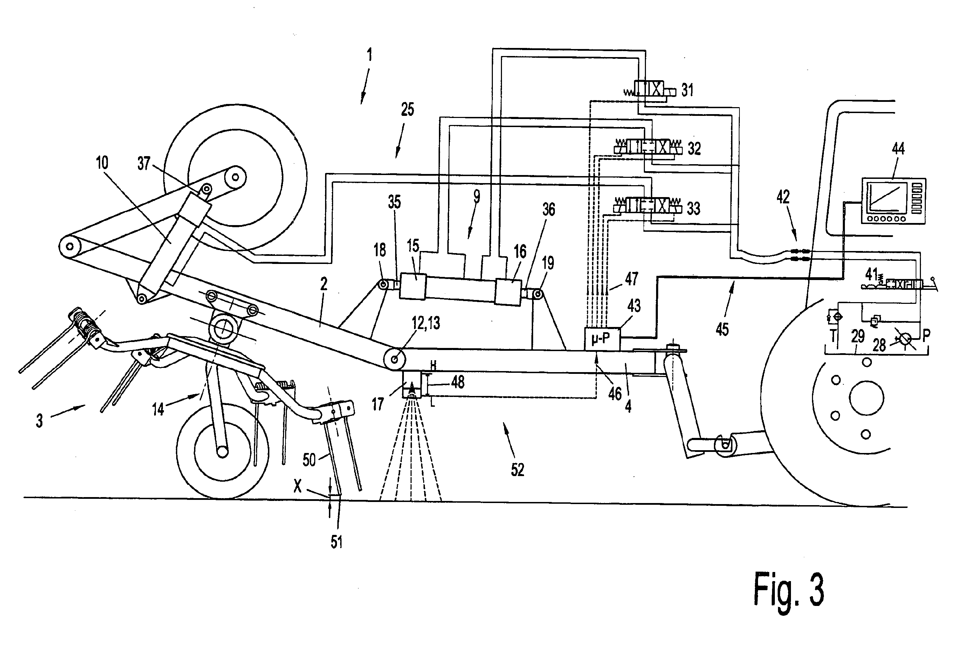

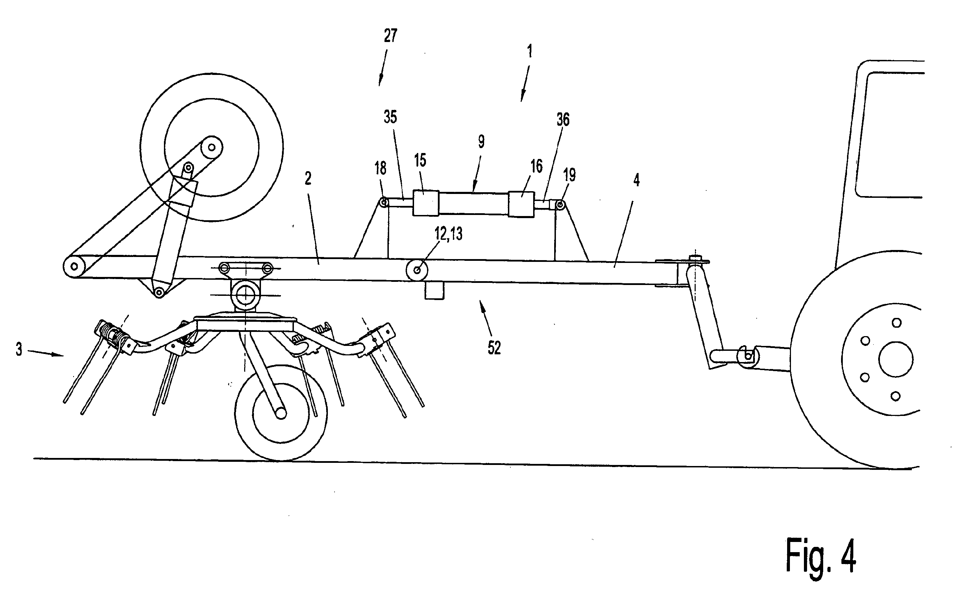

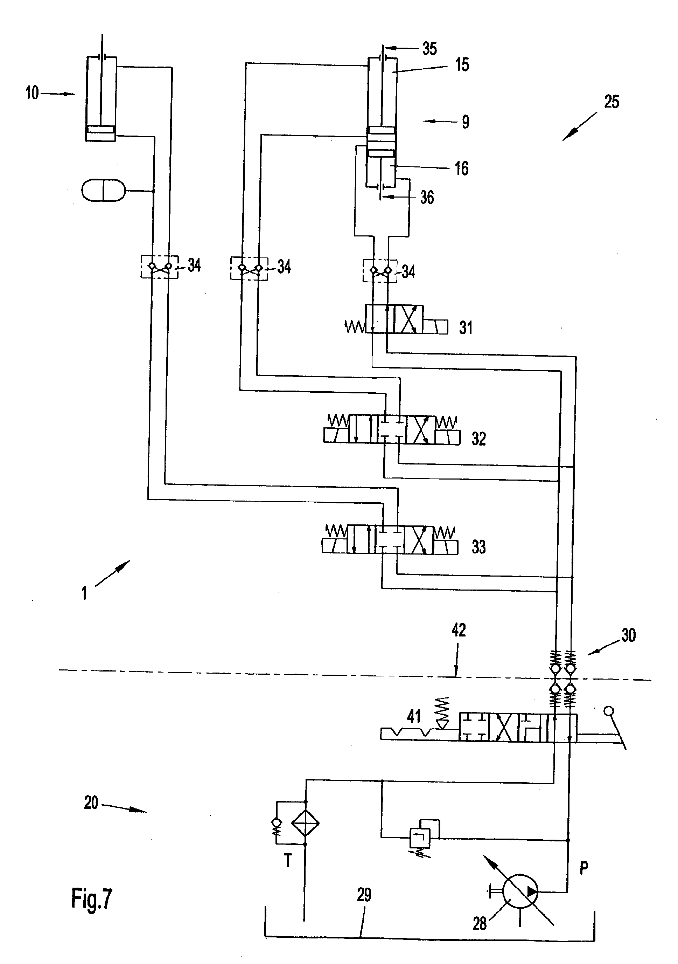

Die in Fig.3 dargestellte Arbeitsstellung 25 zeigt das Stellmittel 9 in der Stellung, in der die beiden Kolbenstangen 35,36, die des ersten Hydraulikzylinders 15 und die des zweiten Hydraulikzylinders 16, bis auf ihre Begrenzung im Hub voll in das Zylindergehäuse eingefahren sind. Ebenfalls eingefahren in das Zylindergehäuse des Hydraulikzylinders 10 ist die Kolbenstange 37 des Fahrwerks 8. In der Darstellung der Fig.3 sind ebenfalls eingetragen die Steuerventile der Hydraulik, ausgeführt als Wegeventile 31,32,33, sowie die Bordhydraulik des Zugfahrzeugs 20. Die dargestellte Situation entspricht der Schaltstellung, wie sie in der Fig. 7 als Hydraulikschaltplan dargestellt ist. Auf Grund des planebenen Bodens 38 generiert der Bodenabstandssensor den Pegel 48, so dass das Eingangssignal 46 an der Steuereinheit 43 ebenfalls auf L (= low) gesetzt ist. Die Steuereinheit 43 beinhaltet als geräteseitigen Jobrechner einen µ-Prozessor mit Ausgängen 47, welche Ausgangsignale zur Ansteuerung der Wegeventile 31,32,33 generieren. Die in Fig.4 dargestellte Vorgewendestellung 27 zeigt das Stellmittel 9 in der Stellung, in der die beiden Kolbenstangen 35,36, die des ersten Hydraulikzylinders 15 und die des zweiten Hydraulikzylinders 16, bis auf ihre Begrenzung im Hub voll aus dem Zylindergehäuse ausgefahren sind. Der zugehörige Steuerbefehl zur Überführung der Heuwerbungsmaschine 1 aus der Arbeitsstellung 25 in die Vorgewendestellung 27 erfolgt mittels der Tastatur des Terminals 44 aus der Kabine des Zugfahrzeugs 20 heraus. Dieser Steuerbefehl wird mittels einer BUS-Leitung 45 als Eingangssignal an die Steuereinheit 43 übermittelt.

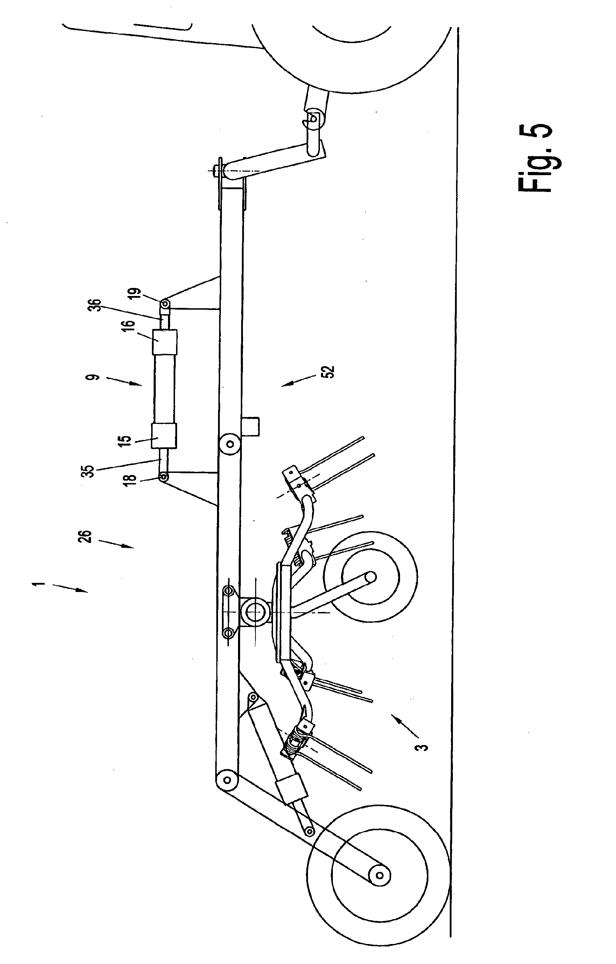

Dieses gilt auch analog für die in Fig.5 dargestellte Transportstellung 26, wobei hinzu kommt, dass sich das Transportfahrwerk 8 dazu, betätigt durch den Hydraulikzylinder 10 (Kobenstange voll aus dem Zylindergehäuse ausgefahren), am Boden 38 abstützt, wodurch die Knickdeichsel 52, bestehend aus Zugdeichsel 4 und Maschinengestell 2, in der gestreckten Länge insgesamt angehoben wird und damit ebenfalls die Rechkreisel 3 vom Boden 38 abgehoben werden.

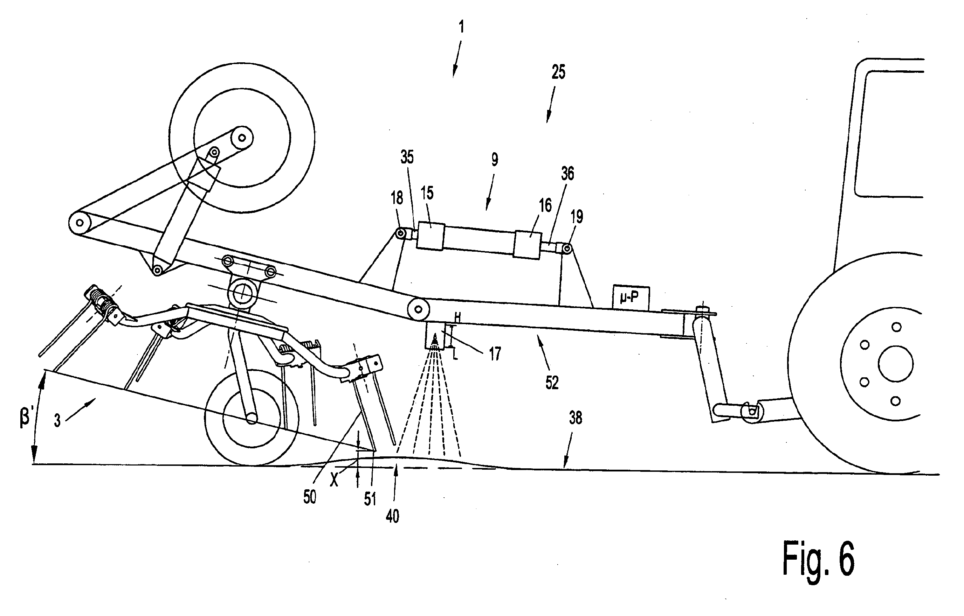

Die in Fig.6 dargestellte Arbeitsstellung 25 zeigt eine Bodenwellenüberfahrstellung 49, wobei sich der Streuwinkel β der Rechkreisel 3 auf β' verändert hat und wodurch sich der Abstand X der Zinkenspitzen 51 der Rechzinken 50 der normalen Arbeitsstellung 25 gemäß Fig. 3 gegenüber dem Boden 38 vergrößert hat. Nach dem Überfahren der Bodenwelle sinkt der Pegel 48 des Bodenabstandssensors 17 wieder auf den vorgegebenen "low" L Pegel 48, wodurch der Streuwinkel β der Rechkreisel 3 und der Abstand X der Zinkenspitzen 51 wieder auf den der normalen Arbeitstellung 25 automatisch zurückgesetzt wird. Die in Fig.6 dargestellte Arbeitsstellung 25 zeigt das Stellmittel 9 in der Stellung, in der die erste Kolbenstange 35 des ersten Hydraulikzylinders 15 voll eingefahren ist und die zweite Kolbenstange 36 des zweiten Hydraulikzylinders 16, voll aus dem Zylindergehäuse ausgefahren ist. Ursächlich dafür ist das Eingangssignal 46 der Steuereinheit 43, welches von dem Bodenabstandssensor 17 durch Überfahren einer Bodenwelle 40 generiert wurde, indem nämlich der Pegel 48 dieses Eingangssignals 46 auf H = "high" gesetzt wurde.

Die Figuren Fig.7 bis Fig.10 veranschaulichen den hydraulischen Teil des Steuerungssystems.

Fig.7 zeigt ein Ausführungsbeispiel für eine hydraulische Beschaltung der Heuwerbungsmaschine 1. Die Trennungslinie symbolisiert die Kupplungsebene als Traktor / Gerätegrenze 42 mit deren Kupplungsstecker 30 zum Anschluss der Hydraulikleitungen. Traktorseitig ist eine Hydraulikpumpe als Load-Sensingpumpe 28 mit der Druckleitung P, dem Hydrauliktank 29 und der Tankrücklaufleitung T, sowie einem Steuergerät 41 dargestellt. Geräteseitig sind die Wegeventile 31,32,33 zur Ansteuerung des Stellmittel 9 mit den Hydraulikzylindern 15 und 16 für die Knickdeichselstabilisierung und den Stellmittel 10, ausgeführt als Hydraulikzylinder, dargestellt. Alle Kolbenstangen 35,36,37 der Hydraulikzylinder 10,15,16 sind von entsperrbaren Zwillingsrückschlagventilen 34 eingespannt und können somit in ihren jeweiligen Endlagen eingespannt bzw. arretiert werden. Fig.7 zeigt die Arbeitsstellung mit der dazugehörigen Stellung des Steuergeräts 41 und den Ventilstellungen der Wegeventile 31,32,33 einschließlich der Stellung der Kolbenstangen der Stellmittel 9,10, bzw. der Hydraulikzylinder 10,15 und 16.

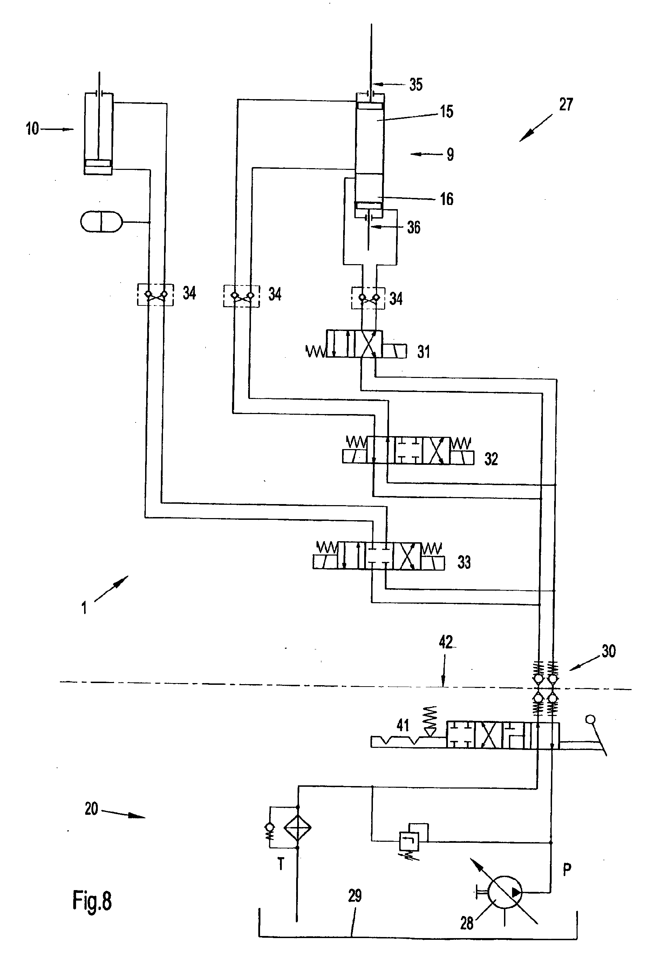

Fig.8 zeigt die Vorgewendestellung 27 mit der dazugehörigen Stellung des Steuergeräts 41 und den Ventilstellungen der Wegeventile 31,32,33 einschließlich der Stellung der Kolbenstangen der Stellmittel 9,10 bzw. der Hydraulikzylinder 10,15 und 16.

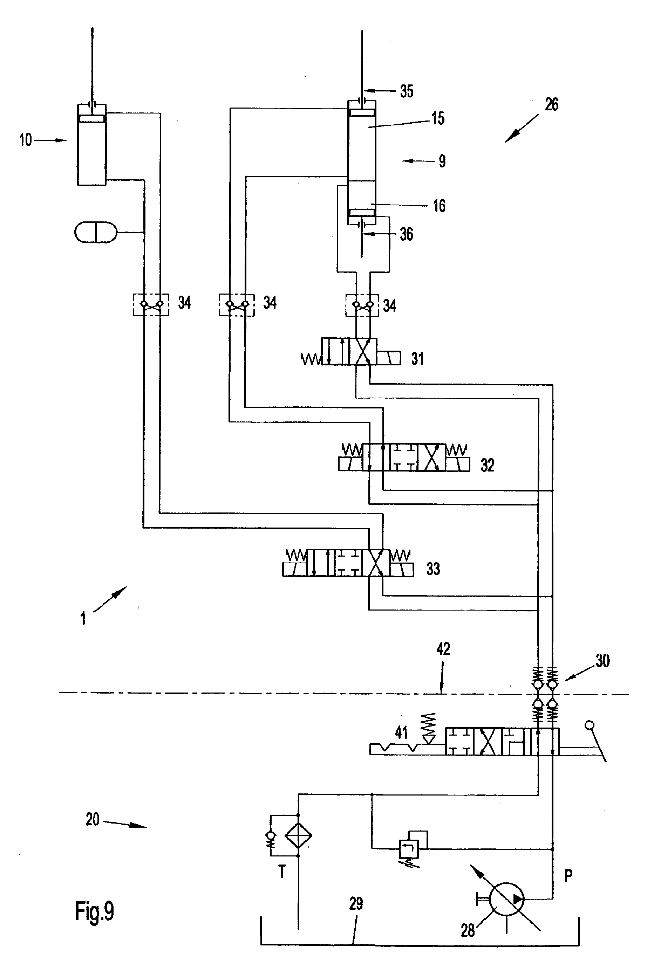

Fig.9 zeigt die Transportstellung 26 mit der dazugehörigen Stellung des Steuergeräts 41 und den Ventilstellungen der Wegeventile 31,32,33 einschließlich der Stellung der Kolbenstangen der Stellmittel 9,10 bzw. der Hydraulikzylinder 10,15 und 16. Ist die Transportstellung 26 erreicht, so kann das Steuergerät 41 des Traktors 20 in Sperrstellung gebracht werden.

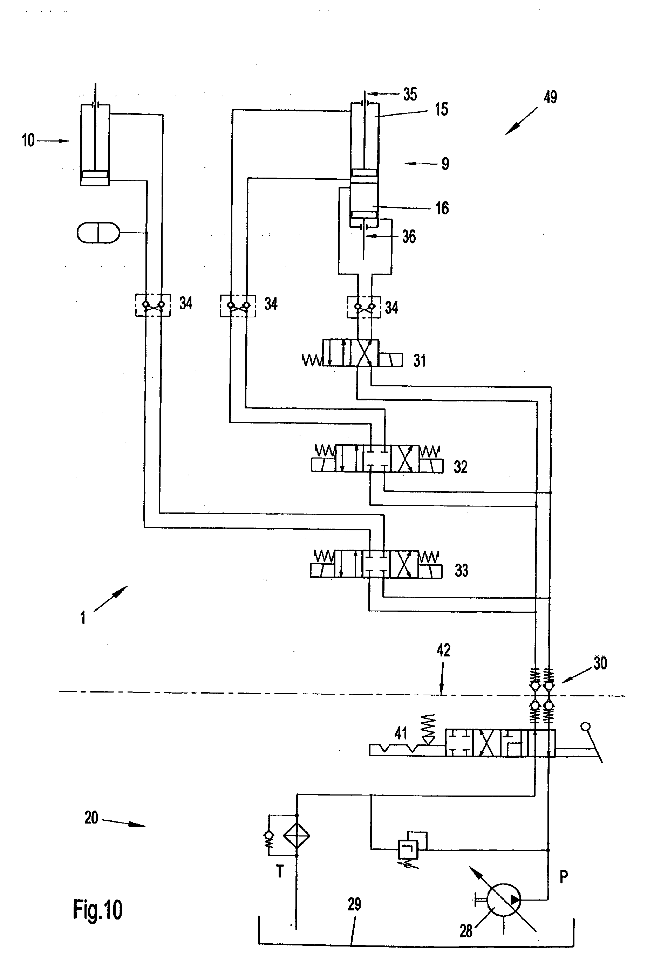

Fig.10 zeigt die Bodenwellenüberfahrstellung 49 mit der dazugehörigen Stellung des Steuergeräts 41 und den Ventilstellungen der Wegeventile 31,32,33 einschließlich der Stellung der Kolbenstangen der Stellmittel 9,10 bzw. der Hydraulikzylinder 10,15 und 16.

In dieser Stellung schaltet das Wegeventil 31, bedingt durch das vom Bodenabstandssensor 17 generierte Eingangsignal 46 mit dem Pegel 48 (H =high), welches am Steuergerät 43 anliegt, um, so dass die Druckleitung P nunmehr an der Kolbenbodenseite der Kolbenstange 36 anliegt und die Kolbenstange 36 infolge dessen aus dem Zylindergehäuse des Hydraulikzylinders 16 ausfährt. Die Folge ist, dass das Maschinengestell 2 und damit die Kreiselachse 14 den Streuwinkel β' einnehmen und sich der Zinkenabstand gegenüber dem Boden vergrößert. Ist die Bodenwelle überfahren und das vom Bodenabstandssensor 17 generierte Eingangsignal 46 wieder auf den Pegel 48 (L=low) abgesunken, kehrt das Wegeventil 31 in seine Arbeitsstellung gemäß Fig.7 zurück und es stellt sich wieder der normale Streuwinkel β ein.

### Bezugszeichenliste

- 1: Heuwerbungsmaschine
- 2: Maschinengestell
- 3: Rechkreisel
- 4: Zugdeichsel
- 5: Anschlussvorrichtung
- 6: Stützrad
- 7: Fahrwerksschwinge
- 8: Transportfahrwerk
- 9: Stellmittel (Streuwinkelverstellzylinder)
- 10: Stellmittel (Hydraulikzylinder)
- 11: Tast- und Stützrad
- 12: Kniegelenk
- 13: Gelenkachse
- 14: Kreiselachse, Hochachse
- 15: erster Hydraulikzylinder
- 16: zweiter Hydraulikzylinder
- 17: Bodenabstandssensor
- 18: Gelenkpunkt
- 19: Gelenkpunkt
- 20: Zugfahrzeug / Traktor
- 21: Gelenk
- 22: Unterlenkerzapfen
- 23: Greifklauen
- 24: Unterlenker
- 25: Arbeitsstellung
- 26: Transportstellung
- 27: Vorgewendestellung
- 28: Load-sensing Pumpe
- 29: Hydrauliktank
- 30: Kupplungsstecker
- 31: Wegeventil
- 32: Wegeventil
- 33: Wegeventil
- 34: entsperrbares Zwillingsrückschlagventil
- 35: Kolbenstange
- 36: Kolbenstange
- 37: Kolbenstange
- 38: Boden
- 40: Bodenwelle
- 41: Steuergerät
- 42: Kupplungsebene Traktor/Gerätegrenze
- 43: Steuereinheit / µ-Prozessor
- 44: Terminal
- 45: BUS - Leitung (Datenbus)
- 46: Eingangssignal
- 47: Ausgänge
- 48: Pegel
- 49: Bodenwellenüberfahrstellung
- 50: Rechzinken
- 51: Zinkenspitze
- 52: Knickdeichsel
- F: Fahrtrichtung
- P: Druckleitung
- T: Tankrücklaufleitung
- X: Abstand der Zinkenspitze zum Boden
- H: high-Pegel
- L: low-Pegel
- β, β': Streuwinkel

## Patentansprüche

1. Heuwerbungsmaschine zum Wenden von am Boden liegendem stängeligem Erntegut mit wenigstens zwei in einem Maschinengestell (2) quer zur Fahrtrichtung nebeneinander gelagerten und gegenläufig zueinander umlaufend um Hochachsen antreibbaren Rechkreisein (3) mit wenigstens einem bodenkopierenden Tast- und Stützrad (11), wobei das Maschinengestell (2) ein zusätzliches Fahrwerk (8) aufweist, weiches wahlweise in oder außer Eingriff mit dem Boden bringbar ist und wobei das Maschinengestell (2) mit einer Zugdeichsel (4) und einer Anschlussvorrichtung (5) zur Ankoppelung an ein Zugfahrzeug (20) ausgestattet ist, und die Zugdeichsel (4) und das Maschinengestell (2) gemeinsam eine Knickdeichsel (52) mit einem Kniegelenk (12) bilden, wobei das Kniegelenk (12) mit einer im Wesentlichen horizontal und quer zur Fahrtrichtung (F) verlaufenden Gelenkachse (13) ausgebildet ist und das Kniegelenk (12) von einem Stellmittel (9) überbrückt ist, **dadurch gekennzeichnet, dass** der Knickdeichsel (52) ein Bodenabstandssensor (17) zugeordnet ist, der das Bodenrelief vor den Rechkrelsein (3) abtastet und wobei der Bodenabstandssensor (17) mit einer Steuereinheit (43) in steuerungstechnischer Wirkverbindung steht und wobei die Knickdeichsel (52) in Verbindung mit dem Stellmittel (9) und dem Bodenabstandssensor (17) in Verbindung mit der Steuereinheit (43) Teil eines Steuerungssystems zum Überfahren von Bodenwellen (40) sind, wobei das Stellmittel (9) einen ersten (15) und zweiten Hydraulikzylinder (16) umfasst, welche in Reihe liegen und deren Kolbenstangen (35,36) unabhängig voneinander angesteuert und betätigt werden können.

2. Heuwerbungsmaschine nach Anspruch 1, **dadurch gekennzeichnet, dass** das Stellmittel (9) durch die Lage der Kolbenstangen (35,36) die Ausrichtung der Knickdeichsel und der Rechkreisel (3) mit bestimmt, wodurch zum einen der Streuwinkel (β,β') und zum anderen die Lage der Rechkreisel in der Arbeitsstellung, in der Vorgewendestellung (27), in der Bodenwellenüberfahrstellung (49) und in der Transportstellung (26) mit bestimmt wird.

3. Heuwerbungsmaschine nach Anspruch 1 bis 2, **dadurch gekennzeichnet, dass** das Stellmittel (9) oberhalb der Zugdeichsel (4) liegt.

4. Heuwerbungsmaschine nach Anspruch 1, **dadurch gekennzeichnet, dass** der Abstandssensor (17) ein Eingangssignal (46) für die Steuereinheit (43) generiert, welches beim Überschreiten eines vorgegebenen Pegels (48) (H=high) Wegeventile ansteuert, welche das Stellmittel (9) derart betätlgen, dass sich der Knickwinkel an der Knickdeichsel automatisch verändert, wodurch sich der Streuwinkel (β) der Rechkreisel (3) auf den Streuwinkel (β') verändert und sich der Abstand (X) der Zinkenspitzen (51) der Rechzinken (50) gegenüber dem Boden (38) verändert, so dass dieser Abstand (X) vergrößert wird, wodurch die Bodenwellenüberfahrstellung (49) herbeigeführt wird und wobei nach dem Überfahren der Bodenwelle der Pegel (48) wieder auf einen vorgegebenen (L=low) Pegel (48) sinkt, wodurch der Streuwinkel (β) der Rechkreisel (3) und der Abstand (X) der Zinkenspitzen (51) wieder auf den der normalen Arbeitsteilung (25) automatisch zurückgesetzt wird.

5. Heuwerbungsmaschine nach den Ansprüchen 1 und 4, **dadurch gekennzeichnet, dass** das Steuerungssystem eine Steuereinheit (43) mit einem µ-Prozessor umfasst.

6. Heuwerbungsmaschine nach den Ansprüchen 1 und 4, **dadurch gekennzeichnet, dass** das Steuerungssystem eine Steuereinheit (43) als Teil der Heuwerbungsmaschine umfasst.

7. Heuwerbungsmaschine nach den Ansprüchen 1 und 4, **dadurch gekennzeichnet, dass** das Steuerungssystem Tell eines BUS-Systems ist.

8. Heuwerbungsmaschine nach den Ansprüchen 1 bis 4 und 7, **dadurch gekennzeichnet, dass** die Steuereinheit (43) des Steuerungssystems als Teil des BUS-Systems über eine BUS-Leitung (Datenbus) (45) mit einem Terminal (44) verbunden werden kann.

9. Heuwerbungsmaschine nach den Ansprüchen 1 bis 4 und 8, **dadurch gekennzeichnet, dass** das Terminal (44) sowohl Teil der Heuwerbungsmaschine (1) als auch Teil des Traktors (20) sein kann.

## Claims

1. A hay making machine for turning stalk crop material lying on the ground comprising at least two raking rotors (3) mounted in mutually juxtaposed relationship transversely relative to the travel direction in a machine frame (2) and drivable in opposite relationship to each other in rotation about vertical axes, with at least one ground-tracking sensing and support wheel (1), wherein the machine frame (2) has an additional chassis (8) which can be brought selectively into or out of engagement with the ground and wherein the machine frame (2) is provided with a towbar (4) and a connecting device (5) for coupling to a tractor vehicle (20) and the towbar (4) and the machine frame (2) jointly form an articulated towbar (52) with a knee joint (12), wherein the knee joint (12) has a joint axis (13) extending substantially horizontally and transversely relative to the travel direction (F) and the knee joint (12) is bridged over by an adjusting means (9), **characterised in that** associated with the articulated towbar (52) is a ground spacing sensor (17) which senses the ground relief in front of the raking rotors (3) and wherein the ground spacing sensor (17) is operatively connected in controlling relationship to a control unit (43) and wherein the articulated towbar (52) in conjunction with the adjusting means (9) and the ground spacing sensor (17) in conjunction with the control unit (43) are part of a control system for passing over bumps (40), wherein the adjusting means (9) includes a first (15) and a second hydraulic cylinder (16) which are disposed in series and whose piston rods (35, 36) can be controlled and actuated independently of each other.

2. A hay making machine according to claim 1 **characterised in that** the adjusting means (9) by the position of the piston rods (35, 36) determines the orientation of the articulated towbar and the raking rotors (3) whereby on the one hand the scatter angle (β, β') and on the other hand the position of the raking rotors is also determined in the working
position, in the headland position (27), in the position (49) for negotiating bumps and in the transport position (26).

3. A hay making machine according to claims 1 and 2 **characterised in that** the adjusting means (9) is disposed above the articulated towbar (4).

4. A hay making machine according to claim 1 **characterised in that** the spacing sensor (17) generates an input signal (46) for the control unit (43), which when a predetermined level (48) (H=high) is exceeded actuates directional control valves which actuate the adjusting means (9) in such a way that the articulation angle at the articulated towbar automatically changes whereby the scatter angle (β) of the raking rotors (3) is altered to the scatter angle (β') and the spacing (X) of the tine tips (51) of the raking tines (50) is altered relative to the ground (38) so that said spacing (X) is increased, whereby the position (49) for negotiating bumps is implemented and wherein after passing over the bump the level (48) falls again to a predetermined level (48) (L=low), whereby the scatter angle (β) of the raking rotors (3) and the spacing (X) of the tine tips (51) is automatically restored to that of the normal working position (25) again.

5. A hay making machine according to claims 1 and 4 **characterised in that** the control system includes a control unit (43) having a µ-processor.

6. A hay making machine according to claims 1 and 4 **characterised in that** the control system includes a control unit (43) as part of the hay making machine.

7. A hay making machine according to claims 1 and 4 **characterised in that** the control system is part of a BUS system.

8. A hay making machine according to claims 1 to 4 and 7 **characterised in that** the control unit (43) of the control system as part of the BUS system can be connected by way of a BUS line (data bus) (45) to a terminal (44).

9. A hay making machine according to claims 1 to 4 and 8 **characterised in that** the terminal (44) can be both part of the hay making machine (1) and also part of the tractor (20).

## Revendications

1. Machine de fenaison pour retourner un produit de récolte à tiges reposant sur le sol, comportant au moins deux rotors de râtelage (3) montés l'un à côté de l'autre transversalement au sens de marche dans un bâti de machine (2) et pouvant être entraînés en rotation en sens contraire l'un de l'autre autour d'axes verticaux, qui présentent au moins une roue d'appui et de jauge (11) copiant le sol, le bâti de machine (2) comportant un châssis supplémentaire (8), lequel peut être mis au choix en ou hors prise avec le sol et le bâti de machine (2) étant équipé d'un timon (4) et d'un dispositif de raccordement (5) pour l'accouplement à un véhicule tracteur (20), et le timon (4) et le bâti de machine (2) formant ensemble un timon articulé (52) avec une genouillère (12), la genouillère (12) étant réalisée avec un axe d'articulation (13) sensiblement horizontal et transversal au sens de marche (F), et la genouillère (12) étant pontée par un moyen de réglage (9), **caractérisée en ce qu'**au timon articulé (52) est associé un capteur de distance du sol (17) qui palpe le relief du sol en avant des rotors de râtelage (3) et le capteur de distance du sol (17) est en liaison fonctionnelle en termes de technique de commande avec une unité de commande (43), et le timon articulé (52) en liaison avec le moyen de réglage (9) et le capteur de distance du sol (17) en liaison avec l'unité de commande (43) font partie d'un système de commande pour franchir les ondulations du sol (40), le moyen de réglage (9) comprenant un premier (15) et un deuxième vérin hydraulique (16) qui sont disposés en série et dont les tiges de piston (35, 36) peuvent être commandées et actionnées indépendamment l'une de l'autre.

2. Machine de fenaison selon la revendication 1, **caractérisée en ce que** le moyen de réglage (9) contribue à déterminer l'orientation du timon articulé et des rotors de râtelage (3) par la position des tiges de piston (35, 36), ce qui contribue à déterminer, d'une part, l'angle d'épandage (β, β') et, d'autre part, la position des rotors de râtelage dans la position de travail, dans la position de fourrière (27), dans la position de franchissement d'ondulations du sol (49) et dans la position de transport (26).

3. Machine de fenaison selon les revendications 1 à 2, **caractérisée en ce que** le moyen de réglage (9) est situé au-dessus du timon (4).

4. Machine de fenaison selon la revendication 1, **caractérisée en ce que** le capteur de distance (17) génère un signal d'entrée (46) pour l'unité de commande (43), lequel commande, en cas de dépassement d'un niveau prédéfini (48) (H = high), des distributeurs qui actionnent le moyen de réglage (9), de façon que l'angle d'articulation sur le timon articulé change automatiquement, après quoi l'angle d'épandage (β) des rotors de râtelage (3) change et devient l'angle d'épandage (β') et la distance (X) des pointes de dent (51) des dents de râtelage (50) par rapport au sol (38) change, de sorte que cette distance (X) est agrandie, produisant ainsi la position de franchissement d'ondulations du sol (49), et le niveau (48) revenant de nouveau à un niveau (48) prédéfini (L = low) après le franchissement de l'ondulation du sol, après quoi l'angle d'épandage (β) des rotors de râtelage (3) et la distance (X) des pointes de dents (51) sont ramenés automatiquement aux valeurs de la position de travail normale (25).

5. Machine de fenaison selon les revendications 1 et 4, **caractérisée en ce que** le système de commande comprend une unité de commande (43) équipée d'un microprocesseur.

6. Machine de fenaison selon les revendications 1 et 4, **caractérisée en ce que** le système de commande comprend une unité de commande (43) faisant partie de la machine de fenaison.

7. Machine de fenaison selon les revendications 1 et 4, **caractérisée en ce que** le système de commande fait partie d'un système de BUS.

8. Machine de fenaison selon les revendications 1 à 4 et 7, **caractérisée en ce que** l'unité de commande (43) du système de commande faisant partie du système de BUS peut être reliée à un terminal (44) par une ligne de BUS (bus de données) (45).

9. Machine de fenaison selon les revendications 1 à 4 et 8, **caractérisée en ce que** le terminal (44) peut faire partie aussi bien de la machine de fenaison (1) que du tracteur (20).
